# EUROPÄISCHE PATENTSCHRIFT

(11) **EP 1 210 200 B1**
(45) Veröffentlichungstag und Bekanntmachung des Hinweises auf die Patenterteilung: **12.11.2003**
(21) Anmeldenummer: 00920314.2
(22) Anmeldetag: 05.05.2000
(51) Int. Cl.: B23D 63/18

(54) **KREISSÄGEBLATT-RICHTMASCHINE**
CIRCULAR SAW BLADE STRAIGHTENING MACHINE
MACHINE A DRESSER LES LAMES DE SCIES CIRCULAIRES

(30) Priorität: 06.05.1999 CH 85499
(43) Veröffentlichungstag der Anmeldung: 05.06.2002
(73) Patentinhaber: Oppliger, Walter, 3138 Uetendorf (CH)
(72) Erfinder: Oppliger, Walter, 3138 Uetendorf (CH)
(74) Vertreter: Braun, André
(86) Internationale Anmeldenummer: CH0000250
(87) Internationale Veröffentlichungsnummer: WO00067940

(56) Entgegenhaltungen:
- EP-B- 0 521 824
- WO-A-96/38251

## Beschreibung

Die Erfindung betrifft eine Kreissägeblatt-Richtmaschine zur Beseitigung von Unebenheiten in Kreissägeblättern mit Richtrollen zur Rückformung unebener Bereiche des Sägeblatts.

Bei der Arbeit von Kreissägen in der Holzverarbeitung treten an den Sägeblättern Unebenheiten auf, die nach wenigen Stunden Arbeitszeit bereits einen Umfang annehmen können, der die Leistungsfähigkeit der Kreissäge stark beeinträchtigt. Kreissägeblätter müssen daher in regelmässigen Abständen gerichtet werden, d.h. Unebenheiten müssen beseitigt werden.

Eine Richtmaschine für diesen Zweck ist in EP-B-0 521 824 beschrieben. In ihr ist das Sägeblatt horizontal angeordnet. Die Richtrollen arbeiten mit Druck von oben und unten.

Der Erfindung liegt die Aufgabe zugrunde, eine Richtmaschine für Kreissägeblätter vorzuschlagen, die mechanisch einfacher und kompakter aufgebaut ist.

Erfindungsgemäss wird dies gelöst durch eine Richtmaschine der eingangs genannten Art, die sich durch die in den Patentansprüchen definierten Merkmale auszeichnet.

Im folgenden wird anhand der beiliegenden Zeichnung ein Ausführungsbeispiel der Erfindung beschrieben. Es zeigen:
- Fig. 1: eine Frontansicht von Sägeblatt und Richtrollen einer Ausführungsform der Maschine und
- Fig. 2: eine Seitenansicht der in Fig. 1 gezeigten Anordnung.

Für die folgende Beschreibung wird auf die EP-B-0 521 82 Bezug genommen. Aus dieser Patentbeschreibung bekannte Ausführungsdetails werden hier nicht wiederholt.

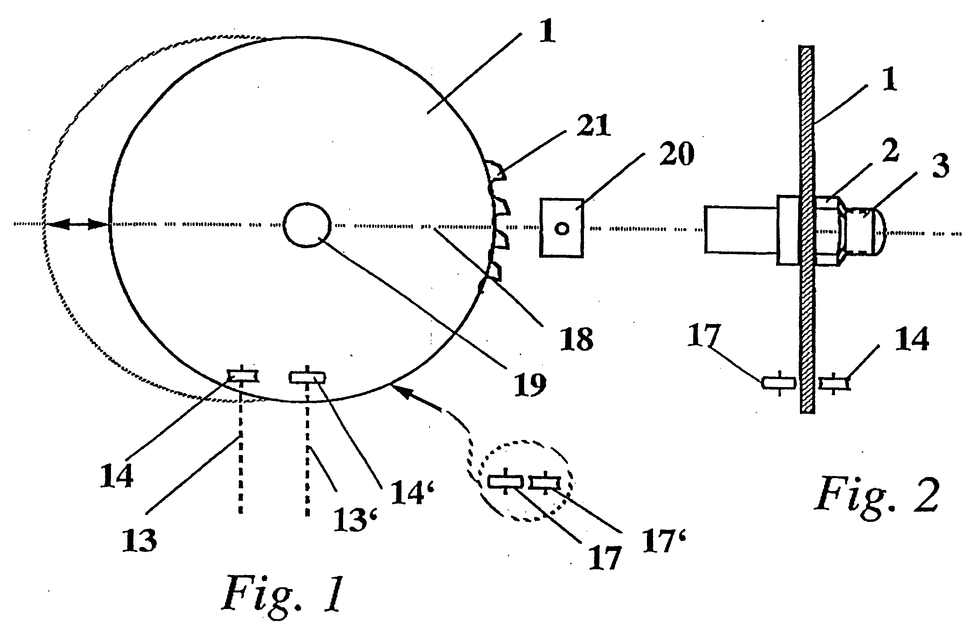

Bei der in den Fig. 1 und 2 ausschnittsweise gezeigten Maschine steht das Sägeblatt senkrecht, und es sind im Gegensatz zum Stand der Technik keine Spannungswalzrollen vorhanden. Statt dessen befindet sich das zweite Richtrollenpaar 14', 17' für die sich über die Rückseite des Sägeblatts erhebenden Unebenheiten auf derselben Seite der Antriebsachse 3 neben dem ersten Richtrollenpaar 14, 17, dort, wo sich bei der vorstehend beschriebenen Ausführungsform das Spannungswalzrollenpaar 28 befindet.

Die rückseitigen Rollen 17, 17' sind in Fig. 1 neben dem Sägeblatt gezeigt, wobei der Pfeil andeutet, dass sie sich auf der in Fig. 1 nicht sichtbaren Seite des Sägeblattes befinden.

Dementsprechend wird die Achse 3 mit dem Sägeblatt zwischen den beiden Positionen für die Glättung der Vorderseite und der Rückseite linear verschoben. Dies erfolgt so, dass zuerst die eine Seite, beispielsweise die Vorderseite, vollständig geglättet und danach das Sägeblatt verschoben und die gesamte Rückseite bearbeitet wird.

Alternativ kann das Sägeblatt so bearbeitet werden, dass jeweils eine Spur vorder- und rückseitig gerichtet wird, bevor die nächste Spur bearbeitet wird. In diesem Fall wird das Sägeblatt für jede Spur zwischen den beiden Positionen verschoben.

Für die Messung ist ein handelsübliches Lasermessgerät 20 vorgesehen. Vor dem Beginn der Bearbeitung wird die Laser-Referenzlinie 18 exakt auf die Achse 3 ausgerichtet. Der Laser 20 fährt so nahe wie möglich zur axialen Bohrung 19 des Sägeblattes 1 und stellt sich auf Nullniveau ein. Anschliessend verfährt der Laser 20 zum Zahngrund 21 des Sägeblattes 1 und stellt fest, ob der Zahngrund 21 denselben Abstand von der Laser-Referenzlinie hat wie das Zentrum des Sägeblattes.

Liegt der Zahngrund ausserhalb der eingestellten Toleranz, so ist das Sägeblatt 1 nicht eben, sondern geschüsselt und muss entschüsselt werden. Dies erfolgt als erstes vor dem Entfernen von kleineren Ausbeulungen des Sägeblattes mit denselben Rollenpaaren. Wenn sich der Zahngrund näher bei der Referenzlinie befindet, ist die Wölbung des Sägeblattes von der Referenzlinie weg gerichtet. Der Laser misst diese Abweichung aber wie eine zur Referenzlinie hin gerichtete Ausbeulung. Zum Entschüsseln muss das Sägeblatt 1 also sozusagen mit dem verkehrten Rollenpaar, d.h. mit dem rechten Rollenpaar 14', 17' bearbeitet werden, bis sich der Mittelwert des Zahngrundes 21 in der eingestellten Toleranz befindet. Umgekehrt muss die Bearbeitung mit dem linken Rollenpaar 14, 17 stattfinden, wenn der Zahngrund einen grösseren Abstand von der Referenzlinie 18 hat und das Sägeblatt 1 somit nach aussen geschüsselt ist.

Im Gegensatz zum Planieren von Beulen werden zum Entschüsseln mit dem jeweils entgegengesetzten Rollenpaar ganze Spuren mit gleichbleibendem Druck gerollt.

Nach dem Entschüsseln des Sägeblattes 1 oder der Feststellung, dass das Sägeblatt eben bzw. in der Toleranz liegt, wird die Planierung der Ausbeulungen vorgenommen. Für diese Bearbeitung wird das Nullniveau zur Referenzlinie am Zahngrund festgelegt, im Gegensatz zum Entschüsseln, bei dem das Nullniveau nahe der Mitte des Sägeblattes 1 definiert wird. Für die nach aussen, d.h. zum Betrachter hin gerichteten Beulen dient das rechte, für die nach innen gerichteten Beulen das linke Rollenpaar.

## Patentansprüche

1. Kreissägeblatt-Richtmaschine zur Beseitigung von Unebenheiten in Kreissägeblättern mit Richtrollen oder -walzen zur Rückformung unebener Bereiche des Sägeblattes, wobei Richtrollen oder -walzen (14, 14', 17, 17') zum Planieren von nach den verschiedenen Seiten des Sägeblattes (1) gerichteten Unebenheiten auf parallel nebeneinander liegenden Achsen (13, 13') laufen, die zu einem Radius des Sägeblatts parallel sind, und das Sägeblatt zwischen zwei Positionen, in denen sich die jeweiligen Achsen (13, 13') in einer durch einen Radius des Sägeblattes definierten, zum Sägeblatt senkrechten Ebene befinden, lateral verschoben wird.

2. Kreissägeblatt-Richtmaschine nach Anspruch 1, die mit einem Lasermessgerät 20 zur Messung der Unebenheiten vorgesehen ist.

3. Kreissägeblatt-Richtmaschine nach Anspruch 2, in der zum sogenannten Entschüsseln des Sägeblattes (1) die Richtrollenpaare für die Unebenheiten verwendet werden, welche der gemessenen Unebenheit entgegengesetzt sind.

## Claims

1. Circular saw blade straightening machine for removing unevennesses in circular saw blades, comprising guide rollers or rolls for reshaping uneven regions of the saw blade, wherein guide rollers or rolls (14, 14', 17, 17') for levelling unevennesses on both sides of the saw blade (1) run on mutually parallel axes (13, 13') that are parallel to a radius of the saw blade, and the saw blade is moved laterally between two positions in which the respective axes (13, 13') are located in a plane defined by a radius of the saw blade and perpendicular to the saw blade.

2. Circular saw blade straightening machine according to Claim 1 which is provided with a laser instrument 20 for measuring the unevennesses.

3. Circular saw blade straightening machine according to Claim 2 in which the pairs of guide rollers used to remove the bulges from the saw blade (1) are the ones opposite the measured unevenness.

## Revendications

1. Machine à dresser les lames de scies circulaires pour l'élimination d'inégalités dans des lames de scies circulaires avec des rouleaux ou cylindres dresseurs pour le refaçonnage des zones inégales de la lame de scie, où des rouleaux ou cylindres dresseurs (14, 14', 17, 17') fonctionnent, pour le planage d'inégalités orientées vers les différents côtés de la lame de scie (1), sur des axes parallèles juxtaposés (13, 13'), qui sont parallèles à un rayon de la lame de scie, et où la lame de scie est déplacée latéralement entre deux positions, dans lesquelles les axes respectifs (13, 13') se trouvent sur un plan horizontal à la lame de scie qui est défini par un rayon de la lame de la scie.

2. Machine à dresser les lames de scies circulaires selon la revendication 1, qui est munie d'un appareil de mesure au laser 20 pour mesurer les inégalités.

3. Machine à dresser les lames de scies circulaires selon la revendication 2, dans laquelle on utilise pour enlever les déformations de la lame de scie (1) les paires de rouleaux dresseurs pour les inégalités, qui vont dans le sens opposé à l'inégalité mesurée.
